# EUROPEAN PATENT APPLICATION

(11) **EP 2 273 416 A1**
(43) Date of publication of application: **12.01.2011**
(21) Application number: 09305599.4
(22) Date of filing: 25.06.2009
(51) Int. Cl.: G06F 21/20, G06F 21/02, H04L 29/06

(54) **Method of managing a one-time password in a portable electronic device**

(71) Applicant: Gemalto SA, 92190 Meudon (FR)
(72) Inventor: Plet, Eric, 83640, Saint Zacharie (FR); Borghino, Franck, 13111 Coudoux (FR)

(57) **Abstract**

The invention is a method of generating a one-time password in a token. The one-time password is generated by using a first time data which is retrieved from a reference clock when the one-time password is about to be generated. The token comprises a second time data. If the second time data is greater than or equal to the first time data then the first time data is updated with an additional duration which is greater than the difference between second and first time data before the generation of the one-time password.

## Description

### (Field of the invention)

The present invention relates to methods of managing one-time passwords in portable electronic devices. The invention is more particularly related to the generation of time-based one-time password.

### (Prior art)

Portable electronic devices are small machines comprising memories, at least one microprocessor and an operating system for computing treatments. In general, portable electronic devices comprise a plurality of memories of different types. For example, they may comprise RAM, ROM, EEPROM or Flash memories. Portable electronic devices may be intended to be connected to a host machine like a desktop computer for example. They may be autonomous devices having their own battery and clock. For example, mobile phones are portable electronic devices.

Many services and data are reachable through wide networks, in particular through the Internet. Several security mechanisms have been offered in order to ensure the security of Internet transactions, to Virtual Private Network (VPN) access, to private resources access and to maintain the privacy of information accessible over private or public network like Internet. To maintain security and privacy, many transactions and communications taking place over the Internet and other networked environments require that a user authenticate himself in order to access information or to conduct transactions. Authentication refers to the method of proving the identity of the user. To be authenticated, a user typically presents a unique credential to a website or network he desires to access. This credential is usually comprised of a username and a secret password. However, static passwords are prone to several types of attacks and impersonations such as "Trojan horses" and "dictionary attacks." A user's static password may also be misappropriated through networking spying or dedicated hacking programs. Thus if the password is stolen, a hacker may access to critical data. To strengthen authentication methods and prevent the types of attacks and impersonations described above, the network security industry has developed the one-time password mechanism. This mechanism relies on dynamic passwords: a new password is used each time. This kind of password is a one-time password, also called OTP. Each new password is generated by hardware or software commonly referred to as an OTP token. The OTP token may be embedded in a portable electronic device, called an OTP device. A hardware OTP token may be an autonomous machine having its own battery, display and clock. A hardware OTP token may also be intended to be connected to an OTP device. In general, the OTP device provides the OTP token with power, clock reference, a display or a communication channel. The OTP device may be designed to display dynamic passwords. When authentication is needed, the user simply enters the dynamic password displayed by the portable device at that time.

One time passwords are used only once. A one time password is typically a numerical value generated by an algorithm. When submitted by a user, it is then compared to a reference value generated by the same algorithm. Thus one-time password technology allows authenticating users on server applications. The password is provided to the user by a portable OTP device and verified by a dedicated server, usually called "validation server".

The OTP token may display the generated one-time password or may directly send the generated one-time password to a connected OTP device. Basically the OTP device may have a display that shows the generated one-time password value to be entered, and the user reads the value and inputs it as a password on another machine. The OTP device may provide a communication channel to automatically send the one time password value to the validation server.

OTP generation can be time-based or event-based. In time-based generation, the OTP value is generated from the current time and the OTP has a limited period of validity. In event-based generation, the OTP value is generated based upon an unscheduled action or event, for instance when a user presses a button on the OTP token or on the OTP device.

Time-based one-time passwords are generated by using a time reference. Thus the validation server may refuse an OTP value if it is presented too much time after its generation time. Time-based one-time passwords have a defined life-time which may be for example of 30 seconds or 60 seconds.

In order to validate an OTP, the validation server must estimate the time of its generation and be synchronized with the clock reference which is used for the OTP generation. For example, if token clock is 31/12/2008, 16:00:00 and, at the same instant, server clock is 01/01/2009, 14:30:00, the validation server will have to know that token clock shift is -22h30 in order to be able to validate correctly OTP values generated by this token. The operation consisting in informing the validation server of the token clock value is called "synchronization".

When using an open device as OTP device (e.g. a mobile phone, a PDA, or a personal computer on which an OTP application is executed), some security issues can be found because the time reference can be modified to a date in the past, then making it possible to have OTP values that can be replayed. This type of attack is called a "replay attack". On the other hand, the OTP system should tolerate that the clock of the OTP device may be legitimately updated by the OTP device user. In a normal use, the clock of the OTP device may go back into the past when the user travels in a country corresponding to a different time zone. If the clock of the OTP device is set to a past date, then an OTP which has been previously used may become valid again. Thus a malicious person who spied and got a previously used OTP value may reuse this OTP when the OTP device clock will reach again the date of OTP generation.

According to the prior art, the validation server may keep a log of the last used OTP values and reject an already used OTP value. An important drawback of this solution is that the validation server must store large databases which may dramatically grow.

There is a need for improving the management of time-based One-time passwords in order to avoid replay attacks.

### (Summary of the Invention)

An object of the invention is to solve the above mentioned technical problem.

The object of the present invention is a method for generating a one-time password in a token. The one-time password is generated by using a first time data which is retrieved from a reference clock when the one-time password is about to be generated. The token comprises a second time data. If the second time data is greater than or equal to the first time data then the first time data is updated with an additional duration which is greater than the difference between second and first time data before the generation of the one-time password.

Advantageously, the method may comprise the further step of updating the second time data with the updated first time data when the one-time password is generated.

In a preferred embodiment the token may be an hardware token connected to a portable electronic device and the reference clock may be embedded in the portable electronic device.

Alternatively, a portable electronic device may comprise both the token and the reference clock.

Another object of the invention is a token intended to generate a one-time password. The token comprises a first means capable of retrieving a first time data from a reference clock. The token comprises a second means capable of generating a one-time password by using the first time data. The token comprises a second time data, a third means and a fourth means. The third means is capable of checking if the second time data is greater than the first time data. The fourth means is capable of updating the first time data with an additional duration which is greater than or equal to the difference between second and first time data. Said update of the first time data is performed before the generation of the one-time password.

Advantageously, the token may comprise a fifth means capable of updating the second time data with the updated first time data when the one-time password is generated.

In a preferred embodiment, the token may be intended to be connected to a portable device. The first means may be capable of retrieving the first time data from a reference clock which is embedded in the portable device.

Advantageously, the token may be a smart card.

Alternatively, the token may be a portable USB flash drive.

Advantageously, a portable electronic device may comprise both the token and the reference clock.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of an OTP token of smart card type according to the invention; and
- Figure 2 is an example of a sequence of OTP generation according to the invention.

### (Detailed description of the preferred embodiments)

The invention may apply to any types of portable electronic device intended to provide time-based one-time passwords generated by an OTP token. In this specification the word "time" must be understood as a date. In other words the OTP may be generated from a time reference value which can be used to compute a date. For example a time reference may be a counter containing a number of seconds since a preset date.

The present invention relies on the fact that the OTP token manages its own time so that the time reference which is used for generating one-time password necessarily increases for each new OTP generation. The invention guarantees that the time value injected in the OTP computation will never be anterior to the time value used for the previous OTP generation. Thus the validation server just has to know the time shift between the clock used by the OTP token and the server clock.

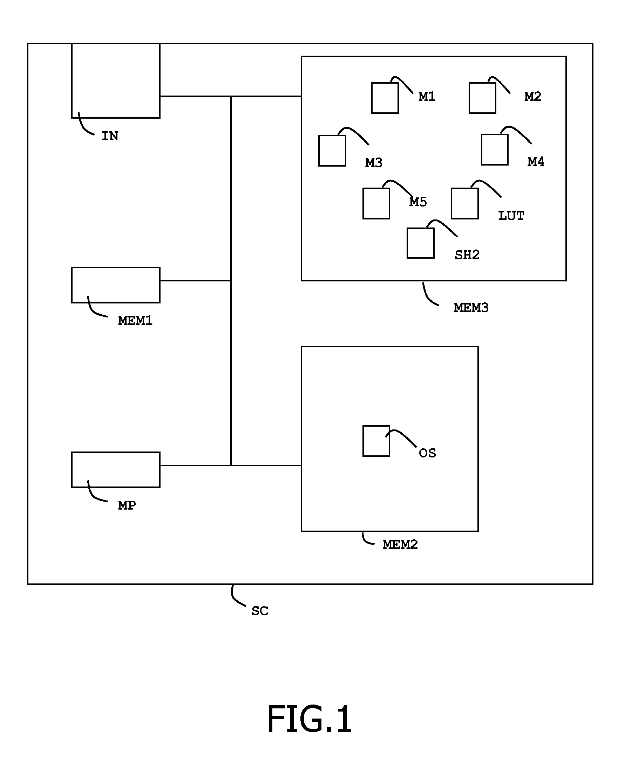

**Figure 1** shows the architecture of an OTP token SC according to the invention. In this example, the token SC is a smart card intended to be connected to an OTP device.

The token SC comprises a working memory MEM1 of RAM type, a microprocessor MP, a communication interface IN and two non volatile memories MEM2 and MEM3. The non volatile memory MEM2 comprises an operating system OS. The memory MEM3 comprises a reference data LUT, an additional duration SH2 and five means M1, M2, M3, M4 and M5. The token SC is intended to be connected to a portable device through the communication interface IN. The reference data LUT stores the last time reference which has been used for OTP generation in the token SC.

The first means M1 is capable of getting a time data CT from a reference clock RC. In a preferred embodiment the reference clock RC is embedded in a portable device connected to the token SC. For example the portable device may be a mobile phone or a personal computer. Alternatively, the token SC may comprise the reference clock RC.

The second means M2 is capable of generating a one-time password based upon the time data CT.

The third means M3 is capable of checking if the reference data LUT is greater than the time data CT retrieved from the reference clock RC.

The fourth means M4 is capable of computing an additional duration SH2 which is greater than or equal to the difference between the reference data LUT and the time data CT. The fourth means M4 is also capable of updating the retrieved time data CT with the computed additional duration SH2.

The fifth means M5 is capable of updating the reference data LUT with the time data CT used for the current one-time password generation.

In this first embodiment, the token SC has no display. Thus the generated OTP is sent through the communication interface IN to the portable OTP device HM.

Alternatively, the token SC may have a display allowing the user to read the generated OTP.

The memories MEM2 and MEM3 may be NAND flash or EEPROM memory or any combination of non volatile memory types.

In a preferred embodiment, the memories MEM2 and MEM3 are implemented in a unique flash memory component.

Advantageously, the access to the reference data LUT which is stored in the memory MEM3 is protected by specific access conditions.

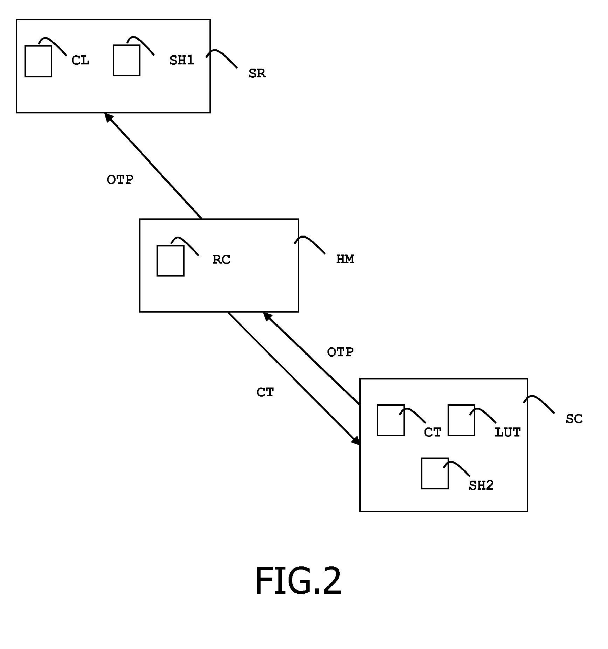

**Figure 2** shows an example of OTP generation step sequence for the method according to the invention.

An OTP token SC is connected to a portable electronic device HM. For example the token SC may be a USB token and the portable device may be a personal computer. A distant server SR may be reached by the device HM through a network like Internet. The distant server SR provides services which require the authentication of the user of the device HM.

The user is authenticated thanks to his token SC that stores a secret shared only with the authentication server SR. For each authentication, the token SC generates a one-time password based upon the shared secret and a time data. When the OTP is received at the authentication server SR, the server SR computes one or several expected OTP values and compares them to the received OTP value. If they match, the user is authenticated. Otherwise, the user is not authenticated. The server SR computes a set of expected OTP values by using its own clock CL.

Advantageously, an OTP value may be generated by the token SC when a dedicated button is pressed on the token SC.

Alternatively, a specific event on the portable device HM may trigger the OTP generation on token side. Likewise, when the token is a soft token, an event triggering a generation of an OTP may be triggered by an event on the device keyboard, by an event generated by the running of a software application, or by any other suitable event.

A possible drift may occur between the clock CL of the server SR and the clock used by the OTP token SC for the OTP generation. In order to take into account this drift, the authentication server SR computes a set of expected one-time passwords for a range of time values meant to encompass the time value used at the token SC side. If one of the one-time passwords calculated by the server SR matches the received OTP then the user is considered as being authenticated.

The number of expected OTP computed for a set depends on the acceptable clock drift size. For example, a token aiming at accessing a bank service may operate with a small drift value and a token aiming at accessing an email account may operate with a large drift value. In particular the acceptable drift value may be within the range of a few minutes to 26 hours.

The present invention relies on the fact that the value of the acceptable clock drift may be set on the server SR side. The computed additional duration SH2 must be compliant with the acceptable clock drift.

When a new one-time password is going to be generated by the token SC, a time data CT is retrieved by the token from the reference clock RC. Then the reference data LUT is compared to the retrieved time data CT in the token SC. If the reference data LUT is greater than or equal to the retrieved time data CT then the time data CT is updated with an additional duration SH2 which is greater than the difference between reference data LUT and time data CT. Then the one-time password is generated with the updated time data CT. Thus the time reference injected in the OTP generation is necessarily greater than the last time reference used for the previous OTP generation. The token SC is capable of computing the duration SH2. For example, the token SC may compute SH2 value as being the result of the following formula: reference data LUT - time data CT +1. The generated OTP is then sent to the authentication server SR via the portable device HM. The server SR computes a set of password candidates by using its own clock CL.

Then the token SC updates the reference data LUT value with the time data CT used for the OTP generation. The reference data LUT is stored in the token SC in order to be available for the next OTP generation. Thus the value stored in the reference data LUT is the sum of the additional duration SH2 and the time data CT retrieved from the reference clock RC of the OTP device HM.

Advantageously a default value of LUT may be set during the OTP device personalization step. When the LUT comprises its default value, the time value provided by the reference clock RC is used without update for the first OTP generation.

According to the invention two one-time passwords which are consecutively generated by a token SC are generated by using increasing time references.

Advantageously, the server SR may comprise a gap duration SH1 which corresponds to the difference between the clock CL and the clock used by the token SC. The clock used by the token SC for generating OTP is the sum of the time data CT and the additional duration SH2.

The gap duration SH1 is already known in the domain of OTP. The duration SH1 is usually updated during a synchronization operation. Before the present invention, the SH1 value reflected the normal and linear drift of the reference clock RC embedded in an OTP device. According to the present invention, the SH1 value reflects the chaotic drift of the clock used by the OTP token SC for generating one-time passwords.

Thanks to the invention, the algorithms currently used in OTP domain may be kept. Thus the invention may be implemented in a cheap way because the OTP system remains compliant with usual existing components.

Another advantage of the invention is to avoid the rejection of a valid OTP. Without the present invention, the rejection of a validly generated OTP may occur when a later OTP is generated at the same date as a previously generated OTP. For example a user may generate a first OTP at 07:25:56. Then the user may move to another time zone at 08:00:00. This travel may automatically update the clock reference of his mobile phone to 07:00:00. If the user generates a second OTP at 07:25:56, the second OTP will be rejected by the validation server since a previous OTP has already been used with the same time.

Another advantage of the invention is to provide a protection against physical attacks on the clock source used by the OTP device.

The synchronization process between the clock CL of the server SR and the clock source RC used by the OTP token may be carried out according to several methods which are well-known in the OTP domain. For example the synchronization may be triggered by an OTP receipt on server SR side. Alternatively, the OTP device user may be asked to send a data allowing to compute the shift SH1 and an OTP which allows to prove the source of the sent data.

## Claims

1. A **method** of generating a one-time password in a token (SC), said one-time password being generated by using a first time data (CT), said first time data (CT) being retrieved from a reference clock (RC) when the one-time password is about to be generated,
**characterized in that** the token (SC) comprises a second time data (LUT) and **in that** if the second time data (LUT) is greater than or equal to the first time data (CT) then the first time data (CT) is updated with an additional duration (S) which is greater than the difference between second and first time data (LUT, CT) before the generation of the one-time password.

2. A method according to claim 1, wherein said method comprises the further step:
- updating the second time data (LUT) with the updated first time data (CT) when the one-time password is generated.

3. A method according to any one of claims 1 to 2, wherein said token (SC) is a hardware token , wherein said token is connected to a portable electronic device (HM), and wherein the reference clock (RC) is embedded in said portable electronic device (HM).

4. A method according to any one of claims 1 to 2, wherein a portable electronic device (HM) comprises said token (SC) and said reference clock (RC).

5. A **token** (SC) intended to generate a one-time password, said token (SC) comprising a first means (M1) able to retrieve a first time data (CT) from a reference clock (RC) and a second means (M2) able to generate a one-time password by using said first time data (CT),
**characterized in that** said token (SC) comprises a second time data (LUT), a third means (M3) and a fourth means (M4), said third means (M3) being able to check if the second time data (LUT) is greater than the first time data (CT), said fourth means (M4) being able to update the first time data (CT) with an additional duration (S) which is greater than or equal to the difference between second and first time data (LUT, CT) before the generation of the one-time password.

6. A token (SC) according to claim 5, wherein said token (SC) comprises a fifth means (M5) able to update the second time data (LUT) with the updated first time data (CT) when the one-time password is generated.

7. A token (SC) according to claim 5 or 6, wherein said token (SC) is intended to be connected to a portable device (HM), and wherein said first means (M1) is able to retrieves the first time data (CT) from a reference clock (RC) which is embedded in said portable device (HM) .

8. A token (SC) according to any one of claims 5 to 7 wherein said token (SC) is a smart card.

9. A token (SC) according to any one of claims 5 to 7 wherein said token (SC) is a portable USB flash drive.

10. A token (SC) according to any one of claims 5 to 7, wherein a portable electronic device (HM) comprises said token (SC) and said reference clock (RC).
